# EUROPEAN PATENT APPLICATION

(11) **EP 1 160 469 A2**
(43) Date of publication of application: **05.12.2001**
(21) Application number: 01304716.2
(22) Date of filing: 29.05.2001
(51) Int. Cl.: F16C 23/08

(54) **Bearing assemblies incorporating roller bearings**

(30) Priority: 30.05.2000 GB 0013097
(71) Applicant: NSK European Technology Co., Limited, Ruddington, Nottingham NG11 6JZ (GB)
(72) Inventor: Wilkinson, Stephen Terence, Newark-on-Trent, Notts., NG23 6EW (GB)
(74) Representative: Brookes Batchellor

(57) **Abstract**

A bearing assembly has several spherical roller bearings (10) with a single row of compact rollers (13) with longitudinal axial dimensions (9) substantially the same as their maximum diametric dimensions (d) normal to the axis. The rollers (13) have convex or concave contact surfaces (15) engaging with complementary contact surfaces (16) of inner and outer rings (11, 12). These rings (11, 12) have the same width, i.e. axial dimension, not much larger than the axial dimension (a) of the rollers (13). The rollers (13) are all inclined so that a projection of a central plane (P) perpendicular to the longitudinal axis extends at a set angle to a common central plane (R) extending radially of the rings.

## Description

### Technical Field

The present invention relates to roller bearings, particularly spherical roller bearings and more particularly to bearing assemblies incorporating one or more such roller bearings.

### Background

Normally cross-located roller bearings suitable for applications where both radial and axial loading is expected are constructed as a double row of rollers inclined in opposite directions. The rollers are spaced apart with cages and have convex outer surfaces which contact concave inner surfaces of inner and outer rings surrounding both the rows of rollers. The rollers are often constrained with ribs integrally formed on the inner ring. DE-19916580 discloses a bearing assembly of the cross-located type with two separate outer bearing rings which engage abutment means on their side faces and a single common inner bearing ring.

### Summary of the Invention

According to one aspect of the invention there is provided a bearing assembly composed of first and second separate roller bearings each composed of inner and outer rings each with curvilinear contact surfaces and rollers of symmetrical shape disposed between the rings and having curvilinear contact surfaces engaging the curvilinear contact surfaces of the associated rings, wherein:
i) the contact surfaces of the rings of each bearing are in contact with only a single row of rollers;
ii) the axial dimension of the inner and outer rings of each bearing is substantially the same as one another and
iii) the rollers of the bearings each have an axial dimension substantially the same as the maximum diametric dimension and the rollers are all inclined so that a projection of a central plane perpendicular to a longitudinal axis of any one of the rollers extends at an angle to a common central plane extending radially of the associated inner and outer rings with the angle of inclination of the rollers of the first bearing being in a different direction to the angle of inclination of the rollers of the second bearing.

The angles of inclination of the rollers of the bearings may be the same or different.

Preferably end faces of the rings of the bearings are held in abutment with one another or with abutment means spacing the first and second bearings axially apart

The axial dimension or width of the rings of the bearings need not be appreciably greater than the axial dimension of the rollers. This means the individual bearings can be especially compact with minimal axial width.

The contact surfaces of the rings of the bearings are preferably continuous and uninterrupted but ribs can be provided on the inner ring to locate and guide the rollers. The ribs can be integral with the inner ring or separate components. The rollers of the bearings can be convex or concave provided they are shaped in a symmetrical manner.

Where the separate bearings abut one another the cross-location of the rollers of the first and second bearings can be such that the projections of the central planes perpendicular to the longitudinal axes of the rollers of the first and second bearings intersect on a plane of radial abutment between the bearings or on a projection of this plane of abutment outside the bearings. In other arrangements however the intersection of the projections of the central planes of inclination of the rollers of the bearings is offset axially from the plane of radial abutment. The intersection of such projections can also be on or offset from the axis of rotation.

In some applications the assembly may employ further similar single row roller bearings arranged in a cascaded abutment with either the first or second bearings with the inclination of the rollers the same as the inclination of the first or second abutting bearing.

In another aspect the invention provides a bearing assembly composed of first and second bearings located in axial abutment, one of the bearings being a roller bearing composed of inner and outer rings each with curvilinear contact surface and rollers of symmetrical shape disposed between the rings and having curvilinear contact surfaces engaging the curvilinear contact surfaces of the associated rings, wherein:
i) the contact surfaces of the rings of the roller bearing are in contact with only a single row of rollers;
ii) the axial dimension of the inner and outer rings of the roller bearing is substantially the same and
iii) the rollers of the roller bearing each have an axial dimension substantially the same as the maximum diametric dimension and the rollers are all inclined so that a projection of a central plane perpendicular to a longitudinal axis of any one of the rollers extends at an angle to a common central plane extending radially of the associated inner and outer rings.

The invention may be understood more readily, and various other aspects and features of the invention may become apparent, from consideration of the following description.

Embodiments of the invention will now be described, by way of examples only, with reference to the accompanying drawings, wherein:

### Brief Description of the Drawings

Figure 1 is a schematic representation of part of a roller bearing usable in an assembly constructed in accordance with the invention;
Figure 2 is a schematic representation of part of another roller bearing usable in an assembly constructed in accordance with the invention;
Figures 3 to 5 depict various ways in which the rings of the bearings can be constructed
Figure 6 is a schematic representation of part of one of the roller bearings in an assembly constructed in accordance with the invention showing the effect of axial loading;
Figures 7 to 10 depict part of assemblies composed of a pair of abutting roller bearings constructed in accordance with the invention;
Figure 11 depicts part of the inner rings of a pair of abutting roller bearings in another assembly constructed in accordance with the invention and
Figures 12 to 14 depict further assemblies employing one or more roller bearings constructed in accordance with the invention.

### Detailed Description of Preferred Embodiment

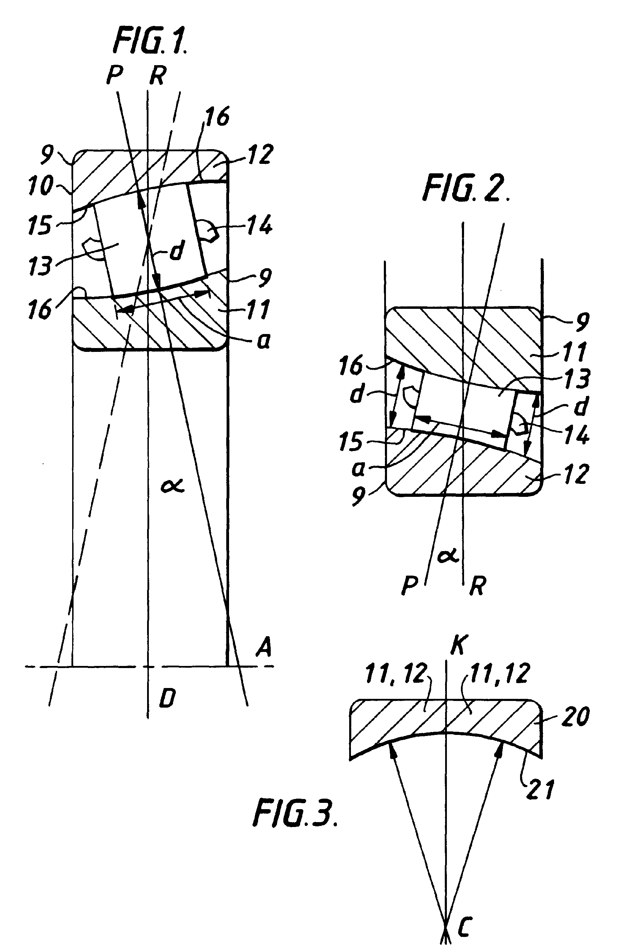

As shown in Figure 1, a roller bearing 10 has inner and outer rings 11, 12 having substantially the same axial dimension or width with a single row of rollers 13 spaced with a cage 14 therebetween. The cage 14 is not essential and a full complement of rollers 13 in contact with one another can be used in certain applications. The rollers have symmetrical convex outer contact surfaces 15 which match complementary concave inner contact surfaces 16 of the rings 11, 12. The contact surfaces 16 are continuous and uninterrupted and terminate at the axial side 9 of the rings 11, 12. However, this is not essential and if desired the inner ring 11 can have radially inwardly extending ribs (integral or otherwise) to locate and guide the rollers 13. The axial dimension 'a' of each of the rollers 13 is substantially the same as the maximum diametric dimension 'd' of the roller.

The rollers 13 are all inclined so that a projection of a central plane P normal to the longitudinal axis of one of the rollers 13 (defining the dimensions a and d) intersects a common central radial plane R of the rings 11, 12 normal to the axis of rotation A at an angle α. Although the plane P is shown to intersect the bearing axis A at a distance D to the right of the drawing the inclination of the rollers of another identical roller bearing 10 would be in the opposite sense so that the plane P then intersects the axis A at a distance D to the left of the drawing as depicted in the dotted outline. As described hereinafter an assembly constructed in accordance with the invention would have at least two roller bearings 10 with the inclination angles α in different directions. These angles α may be the same or different.

Figure 2 shows another roller bearing 10 but one in which the roller contact surfaces 15 are concave and the ring contact surfaces 16 are convex. In this case the maximum diametric dimension d is at the ends of the rollers 13. Otherwise like reference numerals denote the same parts as in Figure 1. In Figures 1 and 2 the inclination angle α is preferably in the range 5° to 44° with osculation preferably in the range 92% to 99%. The axial dimension or width of the rings 11, 12 is not significantly greater than that of the rollers and typically no more than 50% larger.

In an assembly constructed in accordance with the invention and employing at least two roller bearings 10 each bearing 10 contacts an abutment at one or other side so that both rings 11, 12 would then be restrained from moving in the axial direction. As appears hereinafter the provision of an abutment forming means can take a variety of forms such as another bearing. In such an assembly the roller bearings 10 can be a pair of identical bearings and Figures 3 to 5 show the way in which the rings 11, 12 of the pair of bearings 10 of the type shown in Figure 1 can be manufactured. Thus in Figure 3, a component 20 is made with a concave inner surface 21 described from a single centre of curvature C. A component 20 is then split along a diametric plane K passing through the centre of curvature C to create two complementary rings each used as one of the rings 11, 12 of one of the matching pair of bearings 10.

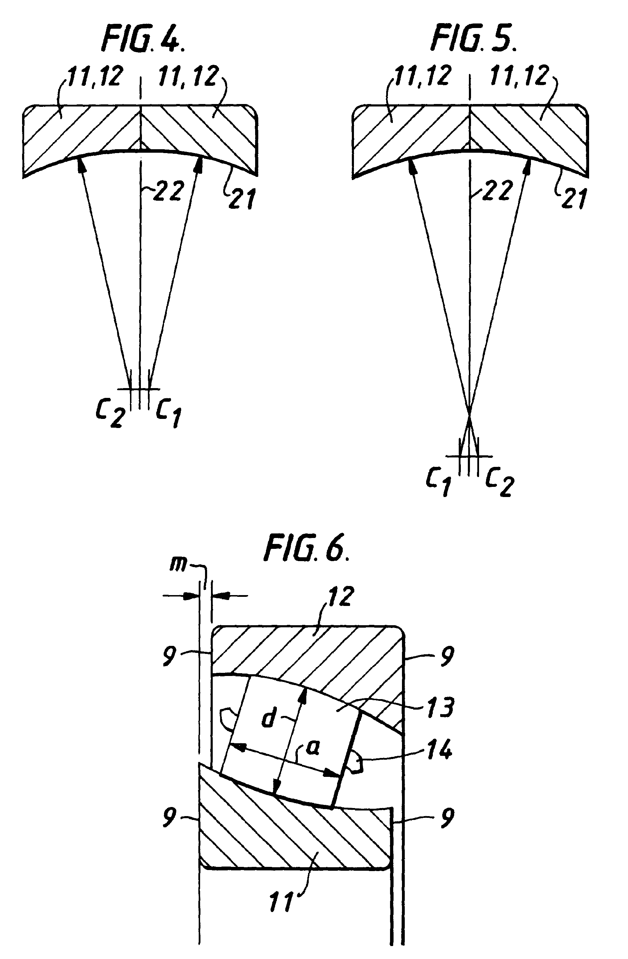

In Figure 4 a pair of rings 11, 12 are located side by side abutting on a radial plane 22 and each ring 11, 12 is then machined with a concave inner surface 21 described from a centre of curvature C₁, C₂ offset from the plane 22 at the same side as the ring. Figure 5 shows a similar configuration to Figure 4 but here the centres of curvature C₁, C₂ are on opposite sides of the plane 22.

Figure 6 depicts a situation where differential axial loading creates an offset m between the corresponding radial sides 9 of the rings 11, 12.

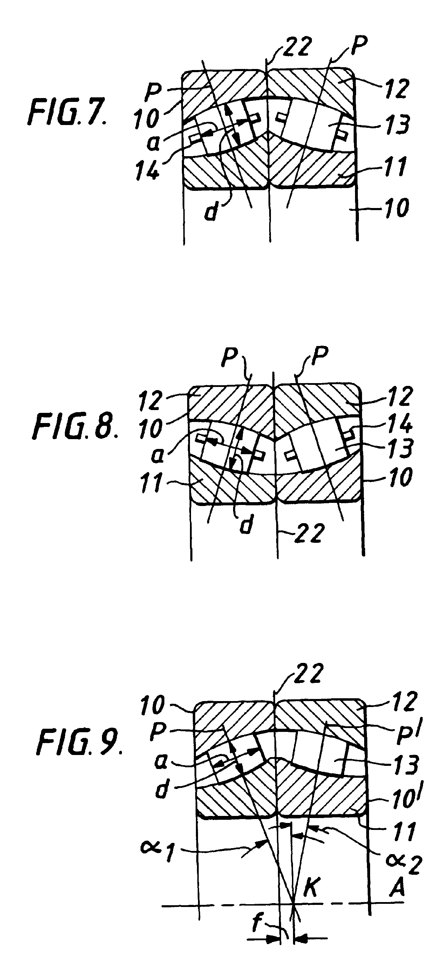

Figure 7 shows an assembly constructed in accordance with the invention with a pair of the roller bearings 10 abutting one another with the rollers 13 inclined in opposite directions so that the planes P of the bearings 10 intersect a radial plane R where the end faces of the rings 11, 12 abut.

Figure 8 shows an assembly with a pair of roller bearings 10 abutting one another with the rollers 13 inclined in an opposite directions so that the planes P of the bearings 10 do not intersect the radial plane 22 within the bearings but rather radially outwardly beyond the outer rings 12.

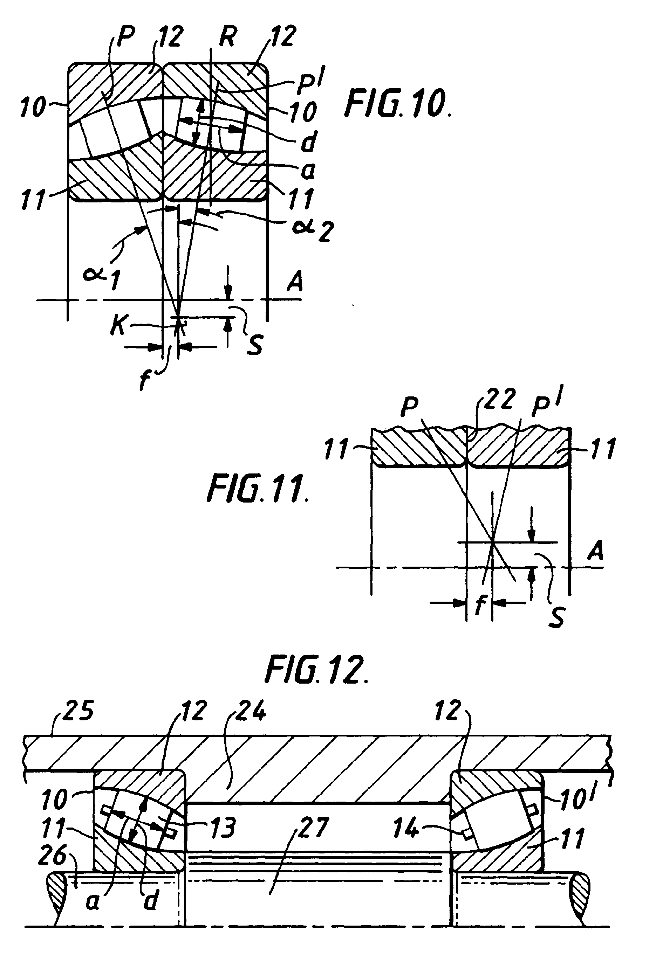

Figure 9 shows an assembly again composed of a pair of roller bearings 10, 10' abutting at the radial plane 22. In this arrangement the angles α₁, α₂ of the bearings 10, 10' are not the same and their respective planes P, P' intersect at a point K offset axially from the radial plane 22 by a distance f but still on the axis of rotation A. Figure 10 shows a further assembly again composed of a pair of roller bearings 10, 10' abutting at the radial plane 22. The angles α₁, α₂ of the bearings 10, 10' are again dissimilar and in contrast to the Figure 9 assembly the planes P, P' of the bearings 10, 10' intersect at a point K both axial offset from the radial plane 22 (d) and outwardly beyond the axis of rotation A as indicated by S. Figure 11 represents an assembly similar to Figure 10 but one in which the point K is offset from the radial plane 22 axial by m and inwardly of the axis of rotation A by S. In Figures 9 to 11 the axial offset m can be in the opposite sense to that shown by inverting the bearings 10, 10'.

Figure 12 depicts an assembly composed of a pair of roller bearings 10, 10' in the configuration of Figure 7, 9, 10 or 11 but now spaced apart from one another. The outer rings 12 of the bearings 10 abut the ends of a radial projection 24 of a component 25 such as a housing and the inner rings 11 abut on the ends of a radial projection 27 of a component 26 such as a spindle or shaft.

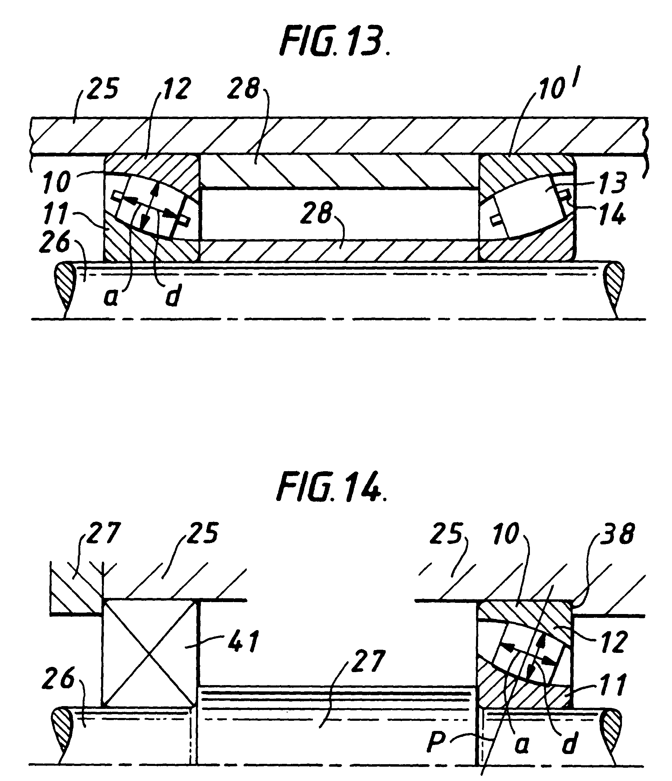

Figure 13 depicts an assembly composed of a pair of roller bearings 10, 10' again spaced apart as in Figure 12. In this assembly the rings 11, 12 abut on the ends of separate spaced sleeves 28 mounted onto the components 25, 26.

Figure 14 shows another assembly but which only uses one roller bearing 10 constructed as described. As in Figure 12, the inner ring 11 of the bearing 10 abuts the radial projection 27 of a shaft or spindle 26 while the outer ring 12 of the bearing 10 abuts a shoulder 38 of the housing 25 at the opposite side to the inner ring abutment. A bearing 41 of another type such as an angular contact ball bearing and shown schematically locates in a similar manner with the projection 27 and an abutment 39 supported on the housing 25.

Instead of just a pair of roller bearings 10, 10' or 10, 10 or one roller bearing 10 and one other bearing 41 assemblies can be created where there are additional roller bearings 10, 10' in direct abutment with one or other of the bearings 10, 10' (or with the bearing 10 in Figure 14) such a cascaded or tandem configuration would have especially high loading capacity.

Assemblies constructed in accordance with the invention are generally able to cope with high radial loading and with axial loading and can be constructed to be inherently tolerant of misalignment and/or shaft flexure. In comparison with conventional double-row spherical roller bearings in particular an assembly in accordance with the invention can exhibit various advantages in relation to size, weight and manufacturing costs. Assemblies constructed in accordance with the invention can be used in a variety of applications where angular contact ball bearings or tapered roller bearings are commonly used such as support bearings for engine crankshafts and centrifugal pumps and vehicle wheel bearings.

## Claims

1. A bearing assembly composed of first and second separate roller bearings (10) each composed of inner and outer rings (11, 12) each with curvilinear contact surfaces (16) and rollers (13) of symmetrical shape disposed between the rings and having curvilinear contact surfaces (15) engaging the curvilinear contact surfaces of the associated rings, wherein:
i) the contact surfaces (16) of the rings of each bearing are in contact with only a single row of rollers (13);
ii) the axial dimension of the inner and outer rings (11, 12) of each bearing is substantially the same as one another and
iii) the rollers (13) of the bearings each have an axial dimension (a) substantially the same as the maximum diametric dimension (d) and the rollers (13) are all inclined so that a projection of a central plane (P) perpendicular to a longitudinal axis of any one of the rollers extends at an angle to a common central plane (R) extending radially of the associated inner and outer rings with the angle of inclination (α) of the rollers of the first bearing being in a different direction to the angle of inclination of the rollers of the second bearing.

2. A bearing assembly composed of first and second bearings (10) located in axial abutment, one of the bearings being a roller bearing composed of inner and outer rings (11, 12) each with curvilinear contact surfaces (16) and rollers (13) of symmetrical shape disposed between the rings (11, 12) and having curvilinear contact surfaces (15) engaging the curvilinear contact surfaces of the associated rings, wherein:
i) the contact surfaces (16) of the rings of the roller bearing are in contact with only a single row of rollers;
ii) the axial dimension of the inner and outer rings (11, 12) of the roller bearing is substantially the same and
iii) the rollers (13) of the roller bearing each have an axial dimension (a) substantially the same as the maximum diametric dimension (d) and the rollers are all inclined so that a projection of a central plane (P) perpendicular to a longitudinal axis of any one of the rollers extends at an angle (α) to a common central plane extending radially of the associated inner and outer rings.

3. An assembly according to claim 1, wherein the angle of inclination of the rollers of the first bearing is different from the angle of inclination of the rollers of the second bearing.

4. An assembly according to claim 1, wherein the first and second bearings are in direct axial abutment with one another and the projections of the central planes (P) of the rollers of the bearings intersect a radial plane of abutment (22) between the bearings.

5. An assembly according to claim 1, wherein the first and second bearings are in direct axial abutment with one another and the projections of the central planes (P) of the rollers of the bearings intersect a projection of a radial plane of abutment (22) between the bearings outwardly beyond the bearings.

6. An assembly according to claim 3, wherein the first and second bearings are in direct axial abutment with one another and the projections of the central planes (P) of the rollers of bearings intersect on the axis of rotation (A) but offset axially of the radial plane of abutment (22) between the bearings.

7. An assembly according to claim 3, wherein the first and second bearings are in direct axial abutment with one another and the projections of the central planes (P) of the rollers of bearings intersect at a location offset both axially of the radial plane of abutment between the bearings (22) and also radially of the axis of rotation (A).

8. An assembly according to claim 1 or 2, wherein end faces of the rings of the bearings are held in abutment with one another or with abutment means spacing the first and second bearings axially apart.

9. A bearing assembly according to any one of claims 1 to 8, wherein the contact surfaces of the rings (16) of the or each roller bearing are continuous and uninterrupted.

10. A bearing assembly according to any one of claims 1 to 9, wherein the contact surfaces (16) of the rings of the or each roller bearing are convex and the contact surfaces (15) of the rollers (13) are concave.

11. A bearing assembly according to any one of claims 1 to 9, wherein the contact surfaces (16) of the rings of the or each roller bearing are concave and the contact surfaces (15) of the rollers (13) are convex.

12. A bearing assembly according to any one of claims 1 to 11, wherein the angle of inclination (α) of the rollers (13) of the or each roller bearing is in the range 5° to 44°.

13. A bearing assembly according to any one of claims 1 to 12, wherein the osculation of the rollers (13) of the or each roller bearing is 92 to 99%.
